Europäisches Patentamt

European Patent Office

Office européen des brevets

(11) Veröffentlichungsnummer: **0 202 452 B1**

# EUROPÄISCHE PATENTSCHRIFT

(45) Veröffentlichungstag der Patentschrift: **11.12.91**

(51) Int. Cl.⁵: **B23H 7/26**, B23Q 16/00, B23H 7/02

(21) Anmeldenummer: **86104898.1**

(22) Anmeldetag: **10.04.86**

(54) **Halte- und Bezugssystem für eine Draht-Funkenerosionsmaschine.**

(30) Priorität: **21.05.85 SE 8502488**

(43) Veröffentlichungstag der Anmeldung:
**26.11.86 Patentblatt 86/48**

(45) Bekanntmachung des Hinweises auf die
Patenterteilung:
**11.12.91 Patentblatt 91/50**

(84) Benannte Vertragsstaaten:
**CH DE LI SE**

(56) Entgegenhaltungen:
**US-A- 3 622 145**

**WERKSTATTSTECHNIK, ZEITSCHRIFT FÜR IN-
DUSTRIELLE FERTIGUNG, Band 74, Nr. 4,
April 1984, Seiten 217-218, Springer-Verlag,
Würzburg, DE; H. AHUIS: "Spannen von
Werkstücken beim Drahterodieren"**

(73) Patentinhaber: **3R Management ab**
**Sorterargatan 1**
**S-162 26 Vällingby(SE)**

(72) Erfinder: **Ramsbro, Börje**
**Bravallavägen 22**
**S-182 63 Djursholm(SE)**

(74) Vertreter: **Zinngrebe, Horst, Dr.rer.nat.**
**Saalbaustrasse 11**
**W-6100 Darmstadt(DE)**

EP 0 202 452 B1

## Beschreibung

Die Erfindung betrifft ein Referenzsystem zum Positionieren eines Werkstücks in einer vorgegebenen Sollage innerhalb des Arbeitsbereichs einer Draht-Funkenerosionsmaschine relativ zum Schneidedraht der Maschine, an deren Aufspanntisch außerhalb des Arbeitsbereichs wenigstens eine ebene, sich in eine X-Richtung und in eine dazu senkrechte Y-Richtung erstreckende Grundbezugsfläche in Höhe der unteren Grenze (0-Linie) des Arbeitsbereichs ausgebildet ist.

Draht-Funkenerosionsmaschinen besitzen eine meist obere Draht-Zuführvorrichtung und eine meist untere Draht-Ableitvorrichtung, zwischen denen sich der Schneidedraht durch den Arbeitsbereich gewöhnlich in z-Richtung erstreckt.

Zur exakten Positionierung eines vom Schneidedraht zu bearbeitenden Werkstückes innerhalb des Arbeitsbereiches ist bei den für die Erfindung in Betracht kommenden Draht-Funkenerosionsmaschinen außerhalb des Arbeitsbereichs eine Grundbezugsfläche am Aufspanntisch vorhanden, die eine Referenz in z-Richtung für die Positionierung des Werkstückes darstellt. Die Grundbezugsfläche ist gewöhnlich die plan geschliffene Oberfläche eines sich aus dem Aufspanntisch in z-Richtung erhebenden Trägers, der parallel zu einer seitlichen Begrenzung des Arbeitsbereichs sich erstreckt. Der Träger erhebt sich soweit über den Aufspanntisch, daß die Grundbezugsfläche in der Nullinie des Arbeitsbereichs liegt, welche dessen untere, dem Aufspanntisch nächstliegende Grenze in z-Richtung ist. Es gibt Draht-Funkenerosionsmaschinen, bei denen sich je ein Träger mit je einer Grundbezugsfläche längs der gegenüberliegenden seitlichen Begrenzungen des Arbeitsbereichs erstreckt, und es gibt andere Draht-Funkenerosionsmaschinen, bei denen der Träger als Winkel ausgebildet ist, so daß sich die Grundbezugsfläche in der Nullinie längs zweier benachbarter seitlicher Begrenzungen des Arbeitsbereichs erstreckt.

Durch die funkenerosive Bearbeitung eines Werkstückes mittels Schneidedraht lassen sich aus Werkstücken Formen mit extrem hoher Genauigkeit und Oberflächengüte herstellen. Da das draht-funkenerosive Bearbeiten eines Werkstückes relativ lange Bearbeitungszeiten erfordert, ist es besonders wichtig, die durch Umrüsten und Einrichten eines zu bearbeitenden Werkstückes bedingten Stillstandzeiten einer Draht-Funkenerosionsmaschine möglichst klein zu halten. Für Senk-Funkenerosionsmaschinen sind mit Referenzflächen versehene Vorrichtungen bekannt, die ein Einrichten eines zu bearbeitenden Werkstückes außerhalb der Maschine an mit Gegen-Referenzflächen versehenen Haltern ermöglichen. Zum Einbau eines neuen Werkstückes in die Sank-Funkenerosionsmaschine braucht dann lediglich der Halter mit eingerichtetem Werkstück an der Maschine befestigt zu werden, wobei durch Zusammenwirken seiner Gegen-Referenzflächen mit den Referenzflächen der an der Maschine verbleibenden Vorrichtungen die genaue Postionierung des Werkstückes automatisch erreicht ist (DE-PS 26 46 951).

Das Draht-FE-Verfahren hat eine sehr positive Entwicklung auf dem Markt erfahren, obwohl es sowohl langsam ist als auch Kapitalaufwand erfordert.

Die schnelle Einbürgerung als akzeptiertes Bearbeitungsverfahren ist vor allem einer Anzahl positiver Eigenschaften zuzuschreiben, die neue Wege für die Herstellung komplizierter Teile mit hohen Anforderungen an Maßtoleranzen und Oberflächengüte eröffnet haben.

Durch elektroerosive Bearbeitung mit Hilfe eines dünnen Drahtes, der durch ein CNC-Steuerungssystem relativ zum Arbeitsbereich gesteuert wird, können sehr komplizierte Formen in zwei Dimensionen hergestellt werden. Die Bearbeitung erfolgt außerdem ohne eigentliche spanabhebende Kräfte auf allen elektrisch leitenden Werkstoffen, ohne Begrenzung der Härte des Werkstückes.

Diese Eigenschaften haben wiederum die Möglichkeit geboten, Werkstücke mit hohen Anforderungen an Maßtoleranzen und Oberflächengüte mit der gleichen Maschineneinrichtung wie bei der Schlichtbearbeitung herzustellen. Eine Härtung des Werkstückes läßt sich vorteilhaft vor der FE-Bearbeitung vornehmen. Da die FE-Bearbeitung ein CNC-gesteurtes Verfahren ist, das sich sehr gut für unbemannten Dauerbetrieb eignet, können die Nachteile der langsamen Bearbeitungsgeschwindigkeit und der hohen Maschinenkosten durch hohe Ausnutzung der Maschinen minimiert werden.

Einige der Voraussetzungen für eine solche hohe Maschinenausnutzung sind, daß der Belegungsgrad der Maschine durch einen breiten Anwendungsbereich hoch gehalten werden kann, wobei die ganze geometrische und belastungsmäßige Kapazität der Maschine ohne zeitraubende Umrüstarbeiten ausgenutzt werden kann.

Da sich das Draht-FE-Verfahren vor allem für Stückherstellung von beispielsweise Werkzeug- und Prototypenteilen eignet, können speziell angefertigte Spannvorrichtungen, die jede Form von Werkstück auf der Maschine eindeutig lokalisieren, aus wirtschaftlichen Gründen nicht hergestellt werden.

Die Abmessungen, das Gewicht und das Volumen der Werkstücke variieren vielmehr innerhalb eines großen Bereiches. Es ist daher für die Leistungsfähigkeit der Maschine von größter Bedeutung, daß Einspannen und Einstellen einzelner Werkstücke von unterschiedlicher Form und Größe mit einem Minimum an Stillstandszeit erfolgen können.

Durch die Anwendung eines generellen, flexiblen Bezugssystems ist es möglich, solche Einstellarbeiten außerhalb der Maschine vorzunehmen, während diese eine andere Aufgabe ausführt. Dabei muß ein festes, im Verhältnis zum arbeitenden Draht der Maschine fixiertes Grundbezugssystem auf der Maschine vorhanden sein. Sekundäre Bezugsniveaus, die neue Werkstücke eindeutig innerhalb des Arbeitsbereichs der Maschine orientieren, könnten anhand dieses Grundbezugssystems auf einer Planscheibe o.ä. gemessen werden, um danach unter Angabe der vom Grundbezugssystem abweichenden Werte ("Offset-Werte") auf die Draht-FE-Maschine übertragen zu werden. Die Anforderungen an ein solches generelles Bezugssystem sind jedoch äußerst hoch.

Damit die Flexibilität und damit der hohe Nutzungsgrad der Draht-FE-Maschine aufrecherhalten werden kann, muß die erste Anforderung an ein Bezugssystem sein, daß mit einer begrenzten Anzahl allgemein verwendbarer Elemente Werkstücke von sehr unterschiedlicher Form und von sehr unterschiedlichem Gewicht innerhalb des Arbeitsbereiches der Maschine gehalten und eindeutig positioniert werden können.

Jede geometrische oder gewichtsmäßige Begrenzung der ursprünglichen Kapazität der Maschine reduziert den Nutzungsgrad.

Da die Draht-FE-Maschine komplizierte Geometrien mit hohen Anforderungen an Maßtoleranz und Oberflächengüte bearbeiten kann, kann die Nachbearbeitung des Werkstücks minimiert werden oder ganz wegfallen. Daher kann trotz des langsamen Bearbeitungsverfahrens die Durchlaufzeit eines Werkstücks durch längeren unbemannten Betrieb kurz gehalten werden. Eine Voraussetzung für eine solche Bearbeitung auf fertige Abmessungen - mit hohen Anforderungen an das Toleranzniveau - ist jedoch, daß Einspannen und Fixieren des Werkstücks in einem Bezugssystem möglich sind, das hohe Anforderungen an Wiederholbarkeit und Maßtoleranzen erfüllt: in diesem Zusammenhang muß auch die Tragfähigkeit des Bezugssystems beachtet werden, da die elastischen Lagenfehler oft größer sein können als die angestrebten Maßtoleranzen.

Mit der immer häufiger vorkommenden Bearbeitung konischer Flächen mit großem Winkel erhalten die Bezugsmaße in der z-Richtung (vertikalen Richtung) der Maschine zunehmende Bedeutung für die Bearbeitungstoleranz. Ein Lagenfehler von 0,02 mm in der z-Richtung ergibt beispielsweise bei 30° Konuswinkel einen x-Achsenfehler von 0,01 mm.

Ferner müssen bei einem generellen Bezugssystem auch wirtschaftliche Aspekte beachtet werden. Für eine rationale Draht-FE-Bearbeitung muß der ganze Anwendungsbereich der Maschine durch die Benutzung einer möglichst kleinen Anzahl von Bezugselementen ausgenutzt werden können, die beim Fixieren des Werkstücks ausreichende Genauigkeit gewährleisten. Modulaufbau, Symmetrie bei der Ausführung und vielfältige Anwendung der vorhandenen Bezugselemente erleichtern eine solche rationelle FE-Bearbeitung. Da die Elektrodenherstellung für Senk-FE-Bearbeitung vorteilhaft auf einer Draht-FE-Maschine erfolgen kann, bedeutet Kompatibilität bei der Ausrüstung zwischen diesen Maschinen eine wirksamere Ausnutzung der vorhandenen Bezugselemente.

Schließlich sind Draht-FE-Bearbeitung und Senk-FE-Bearbeitung oft Teil eines Bearbeitungsprozesses, bei dem mehrere andere Maschinen in Anspruch genommen werden. Dadurch, daß die Bezugselelemente so ausgeführt werden, daß sie den Anforderungen mehrerer Bearbeitungsverfahren, wie Schleifen, Fräsen, Drehen, Draht-FE-Bearbeitung und Senk-FE-Bearbeitung, entsprechen und sich leicht auf einer gewöhnlichen Planscheibe messen lassen, wird ein hoher Nutzungsgrad der vorhandenen Bezugselemente erzielt. Außerdem können mit der heutigen CNC-Technik die Nullpunktbezüge verschiedener Bearbeitungsmaschinen koordiniert werden, was die Programmierarbeit auf eine entscheidene positive Weise beeinflußt.

Beispiele eines solchen generellen Rüstsystems mit festen oder außerhalb der Maschine einstellbaren Bezugsniveaus, die den Anwendungsbereich der Draht-FE-Maschine nicht begrenzen, sind in der schwedischen Patentanmeldung 8401635-1 angegeben.

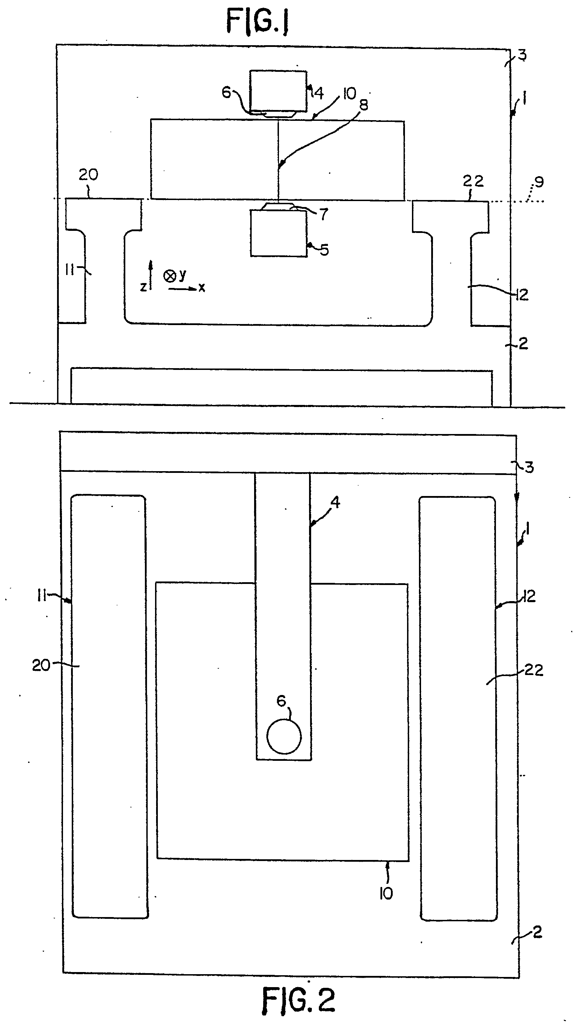

Es gibt jedoch auf dem Markt Maschinen, die mit festen Grundbezugspunkten auf der z-Achse sowie beim A- und B-Winkel versehen sind, bei denen generelle Rüstsysteme nicht direkt anwendbar sind. Der A-Winkel ist der Winkel in einer zur x-Achse rechtwinkeligen Ebene, und der B-Winkel ist der Winkel in einer zur y-Achse rechtwinkeligen Ebene. Diese Maschinen sind in der Regel mit einem Bezugstisch in Form einer Rahmenkonstruktion, einem Winkeltisch oder nur Stützschienen, die rund um den horizontalen Arbeitsbereich der Maschine und außerhalb desselben liegen, ausgerüstet; in diesem Zusammenhang wird auf Abb. 1 und 2 verwiesen.

Durch ihre obere Begrenzungsfläche definieren diese Konstruktionen einen eindeutigen Grundbezug in der Vertikalrichtung der z-Achse, sowie beim A- und B-Winkel. Der Grundbezug in der z-Achse fällt ausnahmslos mit der unteren Grenze des vertikalen Arbeitsbereiches der Maschine zusammen, der sog. Nullinie. Diese Grundbezugsfläche stellt daher auch direkt eine Stützfläche für größere Werkstücke und eine Befestigungsfläche bei ihrem Einspannen dar.

Kennzeichnend für diese Maschinen ist außerdem, daß kein verwendbarer Grundbezug in der x-Achse und y-Achse vorhanden ist und daß der C-Winkel fehlt. Der C-Winkel ist der Winkel in einer zur z-Achse rechtwinkeligen Ebene.

Auf diesen Maschinen soll der Bediener bei jedem Einspannen eines Werkstücks mit Hilfe der auf der Maschine zur Verfügung stehenden elektrischen Meßvorrichtungen die Bezugspunkte des Werkstücks in der x-Achse, y-Achse und im C-Winkel finden und feststellen. Diese Einstellarbeit ist manuell und zeitraubend und verursacht daher einen Verlust an Bearbeitungszeit auf der Maschine.

Außerdem entstehen ausgesprochene Probleme beim Einspannen kleinerer und mittelgroßer Werkstücke, die sich nicht direkt auf dem Bezugstisch der Maschine in der z-Achse fixieren lassen. Wenn solche Werkstücke innerhalb des horizontalen Arbeitsbereiches der Maschine fixiert werden sollen, entstehen oft Fehlpositionierungen in der z-Achse sowie im A- und B-Winkel. Besonders in der z-Achse sind solche Fehlpositionierungen mit den auf der Maschine vorhandenen Meßvorrichtungen nur schwer und zeitraubend festzustellen. Die Folge sind Toleranzfehler, wenn die U-und V-Achse der Maschine für Konusbearbeitung benutzt werden.

Aus dem Dokument US-A 3,622,145 ist ein winkeliges Referenzteil bekannt, dessen Schenkel mehrere, einer bestimmten Geometrie folgende Durchgangsbohrungen aufweist und mit seiner planen Unterfläche durch auf einen mit Nuten versehenen Werkzeugtisch aufgespannt werden kann. Die Geometrie der Durchgangsbohrungen ist dadurch bestimmt, daß das winkelige Referenzteil in verschiedenen Lagen auf dem Tisch festgelegt werden kann. Durch Anlage von Werkstücken an die Seitenflächen der Schenkel des Referenzteils nehmen diese eine vorbestimmte Winkellage ein. Die Werkstücke selbst müssen separat in dieser Lage auf dem Aufspanntisch festgelegt werden. Hierbei können sich Fehler in der Positionierung durch Verspannen des Werkstückes ergeben, die die zulässige Toleranzgrenze überschreiten.

Der Erfindung liegt daher die Aufgabe zugrunde, für die erwähnte Draht-Funkenerosionsmaschine ein Bezugssystem zu schaffen, das eine exakte und wiederholbare Positionierung eines Werkstückes im Arbeitsbereich erlaubt und für die elektronische Steuerung der Maschine als fester Bezugswert für die automatische Steuerung des Bearbeitungsvorgangs geeignet ist.

Bei dem eingangs genannten Referenzsystem wird die Aufgabe nach der Erfindung dadurch gelöst, daß ein Referenzteil eine plane Unterfläche besitzt und mit der Unterflache auf der Grundbezugsfläche eindeutig fixierbar ist, wenigstens eine plane, sich senkrecht zur Unterfläche erstreckende Seitenfläche als Bezugsfläche in x-Richtung sowie gegenüber der Seitenfläche eine Schrägfläche als weitere Bezugsfläche in x-Richtung für ein sekundäres Referenz- oder Halteteil aufweist, und im Querschnitt im wesentlichen Schwalbenschwanzprofil hat. Damit sind in der Nähe des Arbeitsbereichs x-Referenzen geschaffen, die entweder eine Einrichtung eines zu bearbeitenden Werkstückes in einem Halter außerhalb der Maschine ermöglichen oder unmittelbar als direkte Bezugsanlageflächen für das Werkstück in der Maschine dienen können.

Zweckmäßig weist das Referenzteil parallele, sich senkrecht zur Grundbezugsfläche erstreckende Durchgangslöcher auf, wobei dann bevorzugt alle Durchgangslöcher in fluchtender Reihe angeordnet sind. Dadurch kann das Referenzteil mittels Bolzen auf der Grundbezugsfläche exakt fixiert werden. Wenn die jeweils benachbarten Durchgangslöcher jeweils gleichen Abstand voneinander haben, können standardisierte, für Draht-Funkenerosionsmaschinen unterschiedlicher Typen verwendbare Zusatzteile benutzt werden.

Wenn in zweckmäßiger Weiterbildung der Erfindung die Ausdehnung des Referenzteils in x-Richtung wesentlich kleiner ist als die Breite der Grundbezugsfläche in x-Richtung und die Befestigungsmittel sowie mit diesen zusammenwirkende Befestigungseinrichtungen an der Grundbezugsfläche derart angeordnet sind, daß bei auf der Grundbezugsfläche fixiertem Referenzteil in x-Richtung vor der Unterfläche ein sich in y-Richtung erstreckender Grundbezugsflächenabschnitt frei bleibt, kann für das Einrichten beispielsweise großer Werkstücke der frei bleibende Grundbezugsflächenabschnitt als z-Referenz ausgenutzt werden.

Wenn hierbei in der x-Richtung vor und hinter der Unterfläche je ein sich in y-Richtung erstreckender Grundbezugsflächenabschnitt frei bleibt, können die beiden Grundbezugsflächenabschnitte als z-Referenz für das Referenzteil umgreifende Werkstückhalter dienen, wobei die in x-Richtung relativ weit auseinanderliegenden Grundbezugsflächenabschnitte die Kippfestigkeit des Halters in z-Richtung wesentlich sichern.

Wenn in weiterhin bevorzugter Fortbildung der Erfindung der Querschnitt des Referenzteils im wesentlichen Schwalbenschwanzprofil hat, wobei an der relativ zur Unterfläche breiteren Oberfläche die Seitenfläche ausgebildet ist, können mit entsprechenden Schwalbenschwanznuten ausgerüstete sekundäre Referenz- oder Halteteile für das Werkstück benutzt werden, welche bei anderen Funkenerosionsmaschinen eingesetzt werden. Dabei kann wenigstens eine der Schrägflächen des Schwalbenschwanzprofils als Referenz für das sekundäre Halteteil plan gearbeitet sein.

Als y-Referenz ist in erfindungsgemäßer Weiterbildung wenigstens eine plane Stirnfläche am Referenzteil vorgesehen, die sich senkrecht zu der Seitenfläche und zu der Grundbezugsfläche erstreckt. Alternativ kann ein Ansatz vorgesehen sein, welcher eine über die Oberfläche und/oder die Seitenfläche vorstehende, zur Seitenfläche und zur Grundbezugsfläche senkrechte Anschlagfläche als y-Referenz aufweist. Zweckmäßig ist der Ansatz an der Stirnfläche befestigt und erhebt sich über die Oberfläche.

Es erweist sich als besonders vorteilhaft, wenn das Referenzteil eine flache, langgestreckte Form hat, wobei die quer zur Unterfläche gemessene Stärke des Referenzteils wesentlich kleiner ist als seine Breite oder seine Länge.

Die Erfindung wird nachstehend an dem in den beigefügten Zeichnungen dargestellten Ausführungsbeispiel im einzelnen beschrieben. Es zeigen:

| | |
|---|---|
| Figur 1 | eine Vorderansicht einer schematisch dargestellten Draht-Funkenerosionsmaschine; |
| Figur 2 | eine Draufsicht auf die Maschine nach Figur 1; |
| Figur 3 | eine Draufsicht auf ein Referenzteil zur Verwendung in der Draht-Funkenerosionsmaschine nach Figuren 1 und 2; |
| Figur 4 | eine Seitenansicht des Referenzteils nach Figur 3; |
| Figur 5 | eine Stirnansicht des Referenzteils nach Figur 3; |
| Figur 6 | einen Ausschnitt aus Figur 1 mit eingerichtetem Referenzteil; |
| Figur 7 | einen Ausschnitt aus Figur 2 mit eingerichtetem Referenzteil; |
| Figur 8 | einen schematischen Ausschnitt aus Figur 1 mit Referenzteil und sekundären Werkstück-Halteteilen; |
| Figur 9 | einen Ausschnitt aus Figur 1 mit Referenzteil und sekundären Halteteilen; |
| Figur 10 | eine Draufsicht auf einen Ausschnitt auf eine Draht-Funkenerosionsmaschine in anderer Ausführung; |
| Figur 11 | die Ansicht eines Schnittes A-A aus Figur 10; |
| Figur 12 | eine der Figur 10 ähnliche Darstellung mit einem weiteren Referenzteil; und |
| Figur 13 | die Ansicht eines Schnittes längs der Linie 1A-A1 aus Figur 12; |

In den Figuren 1 und 2 ist eine Draht-Funkenerosionsmaschine schematisch mit 1 bezeichnet. Sie weist einen Aufspanntisch 2 sowie ein rückwärtiges Oberteil 3 auf. Aus dem Oberteil 3 stehen nach vorne über den Aufspanntisch 2 zwei parallele Arme 4, 5 vor, die mit Abstand übereinander angeordnet sind. Am vorderen Ende des oberen Armes 4 befindet sich eine Drahtzuführvorrichtung 6 und am vorderen Ende des unteren Armes 5 befindet sich gegenüber der Drahtzuführvorrichtung 6 eine Drahtableitvorrichtung 7. Zwischen der Drahtzuführvorrichtung 6 und der Drahtableitvorrichtung 7 ist der Schneidedraht 8 der Maschine ausgespannt, der sich im dargestellten Beispiel in der Z-Richtung von oben nach unten bewegt.

Nicht dargestellt und beispielsweise im Oberteil 3 beherbergt ist die CNC-Steuerung der Maschine sowie die Antriebsvorrichtungen für den kontinuierlichen Vorschub des Schneidedrahtes 6 aus der Drahtzuführvorrichtung 6 in die Drahtableitvorrichtung 7. Ferner gehört zu der Maschine eine elektrische Ausrüstung, die für ein funkenerosives Bearbeiten eines Werkstückes mittels des Schneidedrahts 8 in bekannter Weise erforderlich ist. Ferner sind nicht dargestellt Einrichtungen zur seitlichen Führung oder Verschwenkung des Schneidedrahtes 8 nach Befehlen aus der CNC-Steuerung, welche nach einem in die Steuerung eingegebenen Programm aus einem Werkstück ein oder mehrere Teile vorgegebener geometrischer Gestalt herauszuschneiden gestatten. Der Arbeitsbereich 10, der in den Figuren 1, 2 sowie 6, 7 schraffiert dargestellt ist, gibt jenen dreidimensionalen Raumbereich an, innerhalb dessen eine funkenerosive Bearbeitung eines Werkstückes mittels des Schneidedrahts 8 durch entsprechende Relativbewegungen zwischen dem eingespannten Werkstück und dem Schneidedraht 8 möglich ist. Die in Z-Richtung untere Grenze des Arbeitsbereichs 10 ist als Nullinie 9 punktiert angegeben.

Aus dem Aufspanntisch 2 erheben sich zwei Träger 11, 12, von denen jeder sich längs einer der beiden gegenüberliegenden Längsseiten des Arbeitsbereichs 10 erstreckt. In Figur 1 eingetragen sind die X-Richtung, die vom Träger 11 zum Schneidedraht parallel zur Nullinie weist, ferner die Y-Richtung, die in die Ansichtsebene der Figur 1 hineinweist, und die Z-Richtung, die senkrecht zur Nullinie 9 sich parallel zum Schneidedraht 8 erstreckt.

Die Oberfläche des Trägers 11 ist in der X-Y-Ebene in solcher Höhe plangeschliffen, daß sie eine Grundbezugsfläche 20 bildet, welche in Höhe der Nullinie 9 und außerhalb des Arbeitsbereichs 10, jedoch neben diesem liegt. Die Oberfläche des zum Träger 11 parallel Trägers 12 ist ebenfalls in der X-Y-Ebene plangeschliffen, sodaß sich eine Grundbezugsfläche 22 ergibt, die in Höhe der Nullinie 9 sowie außerhalb des Arbeitsbereichs 10, jedoch neben diesem liegt. Eine oder beide der Grundbezugsflächen 20, 22 dienen als Z-Referenz für die Einrichtung eines Werkstückes im Arbeitsbereich 10.

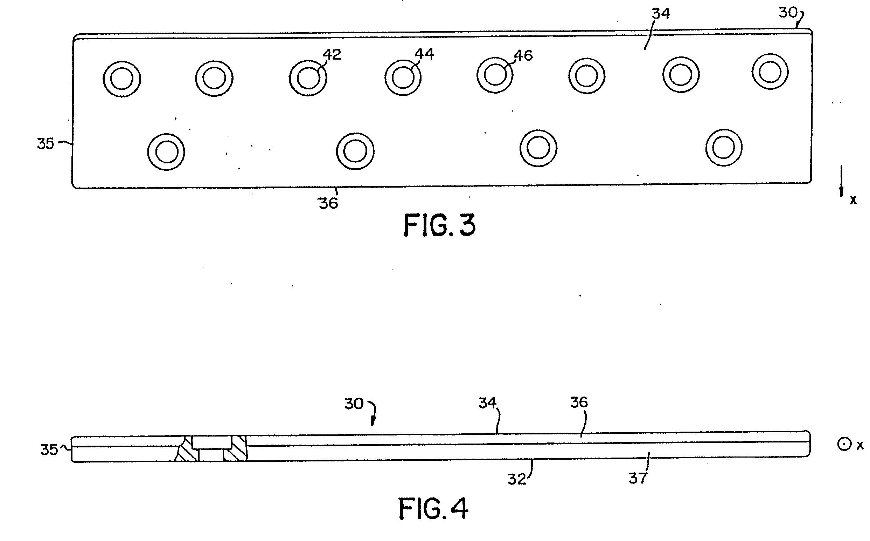

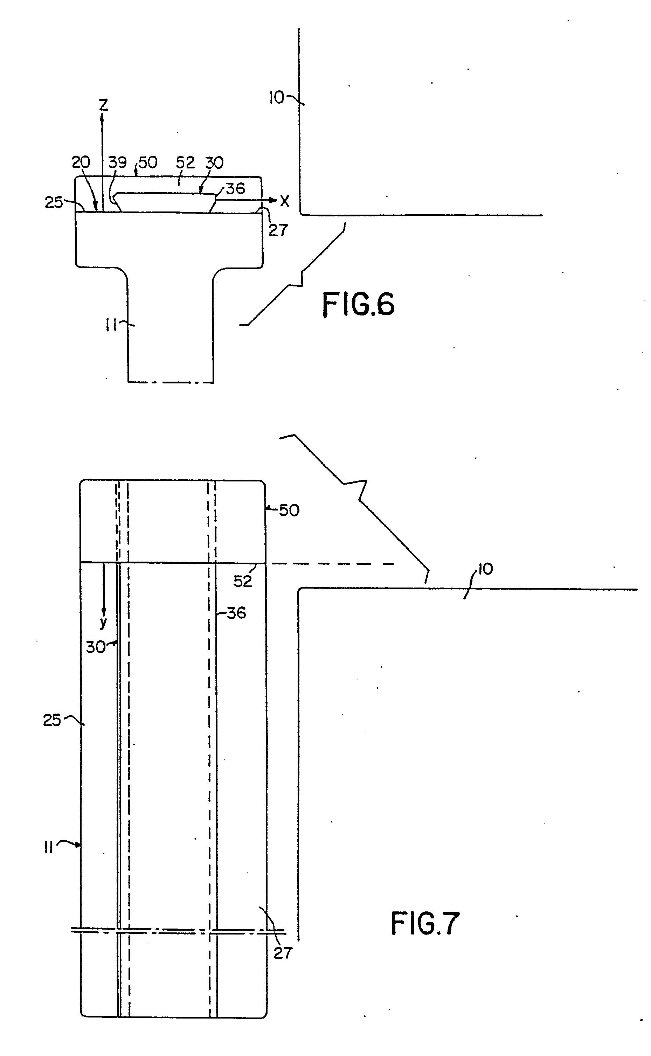

Auf jeder der beiden Grundbezugsflächen 20, 22 ist je ein Referenzteil 30 gemäß Figuren 3 bis 5 mittels Bolzen befestigt. Das Referenzteil ist ein flacher plattenför miger Streifen aus gehärtetem Werkzeugstahl, dessen quer zur Unterfläche 32 gemessene Stärke wesentlich geringer ist als seine Breite oder seine Länge. Die Unterfläche 32 ist plan und dazu bestimmt, bei Befestigung des Referenzteiles 30 auf der Grundbezugsfläche 20 aufzuliegen. Die Oberfläche 34 erstreckt sich parallel zur Unterfläche 32. Die Stirnfläche 35 erstreckt sich im rechten Winkel zur Unterfläche 32. Der Querschnitt entsprechend der Stirnansicht gemäß Figur 5 hat im wesentlichen ein Schwalbenschwanzprofil, wobei die Oberfläche 34 eine größere Breite hat als die Unterfläche 32. Das Referenzteil 30 weist eine an die Oberfläche 34 angrenzende Seitenfläche 36 auf, die mit der Unterfläche 32 sowie der Stirnfläche 35 je einen rechten Winkel einschließt und sich daher in Y-Richtung erstreckt, wenn das Referenzteil 30 auf der Grundbezugsfläche 20 befestigt ist. Zur Unterfläche 32 geht die Seitenfläche 36 in eine nach innen geneigte Schrägfläche 37 über. An der der Seitenfläche 36 gegenüberliegenden Seite besitzt das Referenzteil 30 eine weitere Schrägfläche 39, die in noch zuerwähnender Weise als Referenzfläche plangeschliffen ist und sich nach innen und unten zur Unterfläche 32 hin erstreckt.

Gemäß Figur 3 weist das Referenzteil 30 mehrere Durchgangslöcher auf, von denen wenigstens parallel einige längs einer fluchtenden Reihe angeordnet sind und von denen jeweils benachbarte Löcher, beispielsweise die Löcher 42, 44, 46, gleichen Abstand voneinander haben. Jedes der Durchgangslöcher ist von der Oberfläche 34 her zur Aufnahme des Kopfes eines nicht dargestellten Bolzens 31 (Fig. 13) aufgeweitet.

Nicht dargestellt ist in Figur 2, daß die Grundbezugsfläche 20 und die Grundbezugsfläche 22 jeweils mit Befestigungseinrichtungen in Form von Gewindebohrungen versehen sind, die entsprechend den Durchgangslöchern des Referenzteils in den Träger 11 bzw. 12 eingebracht sind, wobei je eine Gewindebohrung mit einem zugehörigen Durchgangsloch des Referenzteils 30 fluchtet. Auf diese Weise kann das Referenzteil 30 mittels Bolzen 31 auf der Grundbezugsfläche 20 oder der Grundbezugsfläche 22 genau positioniert und fixiert werden. In die Figuren 3 bis 5 ist jeweils die X-Richtung eingetragen, die für die Orientierung des Referenzteils 30 bei der Positionierung auf der Grundbezugsfläche 20 maßgebend ist.

Das Referenzteil 30 wird, wenn es zweckmäßig mit einer längs seiner Mittellinie verlaufenden Reihe von Durchgangslöchern versehen ist, gemäß Figur 6 mittig auf der Grundbezugsfläche 20 des Trägers 11 in der erwähnten Weise fixiert, sodaß seine Längs-Mittellinie mit der Längs-Mittellinie der Grundbezugsfläche 20 zusammenfällt. Man erkennt aus Figur 6, daß die Breite des Referenzteils 30 quer zur Seitenfläche 36, also in X-Richtung, wesentlich kleiner ist als die Breite der Grundbezugsfläche 20. Bei mittiger Montage des Referenzteils 30 auf der Grundbezugsfläche 20 bleibt, daher beiderseits des Referenzteils 30, das heißt in X-Richtung vor und hinter dem Referenzteil 30, je ein Grundbezugsflächenabschnitt 25, 27 frei, von denen sich jeder demzufolge in Y-Richtung erstreckt. Bei aufmontiertem Referenzteil 30 ist somit eine X-Referenz in Form der Seitenfläche 36 sowie eine Z-Referenz in Form der Grundbezugsflächenabschnitte 25 und 27 gegeben.

Um auch eine Y-Referenz zu schaffen ist das Referenzteil 30 gemäß Figuren 6 und 7 mit einem blockförmigen Ansatz 50 an seiner Stirnfläche 35 verbunden, der über das Profil des Referenzteils 30 seitlich und nach oben vorsteht. Der Ansatz 50 weist eine Anschlagfläche 52 auf, welche sich rechtwinkling zur Seitenfläche 36 sowie zur Grundbezugsfläche 20 erstreckt und an der Stirnfläche 35 anliegt. Diese Anschlagfläche 52 bildet die Y-Referenz, wie Figur 7 zeigt. Der Ansatz kann die Form einer kleinen Lasche haben, welche an die Stirnfläche 35 angeschraubt ist und sich mit einer Anschlagfläche über die Oberfläche 34 erhebt. Alternativ kann der Ansatz ein Reiter 64 (Fig. 12, 13) sein, auf den noch eingegangen wird.

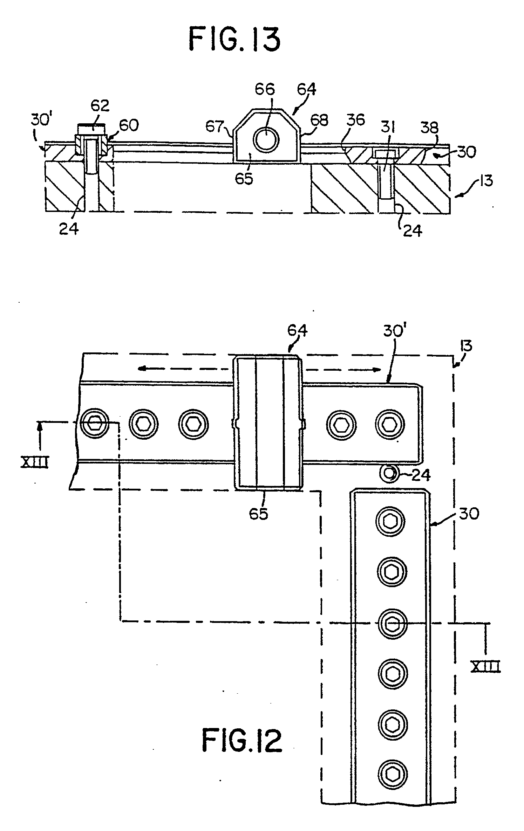

Der Grundbezugsflächenabschnitt 27 kann zur Auflage eines relativ großen rechtwinkligen Werkstückblocks 80 dienen, wie Figuren 11 und 12 zeigen. Dabei ist der Block durch Auflage auf den Grundbezugsflächenabschnitt 27 in Z-Richtung und durch Anlage seiner Seitenfläche 82 an der Seitenfläche 36 in X-Richtung in der Maschine eingerichtet. In der eingerichteten Stellung kann der Werkstückblock 80 durch mehrere Klammern festgehalten werden, von denen in Figur 11 eine Klammer 90 im Schnitt dargestellt ist. Die Klammer 90 besitzt dazu einen Längsschlitz 92, durch den sich ein Langbolzen 94 erstreckt. Der Langbolzen 94 durchdringt eines der Löcher im Referenzteil 30 und ist mit seinem Gewindeabschnitt in der zugehörigen Bohrung im Träger 11 verschraubt. Ein Stützelement 96 hält das vom Werkstückblock 80 wegweisende Ende der Klammer 90 gegenüber dem Grundbezugsflächenabschnitt 25 auf dem nötigen Abstand, und der vordere Finger 98 der Klammer 90 übergreift den Werkstückblock 80.

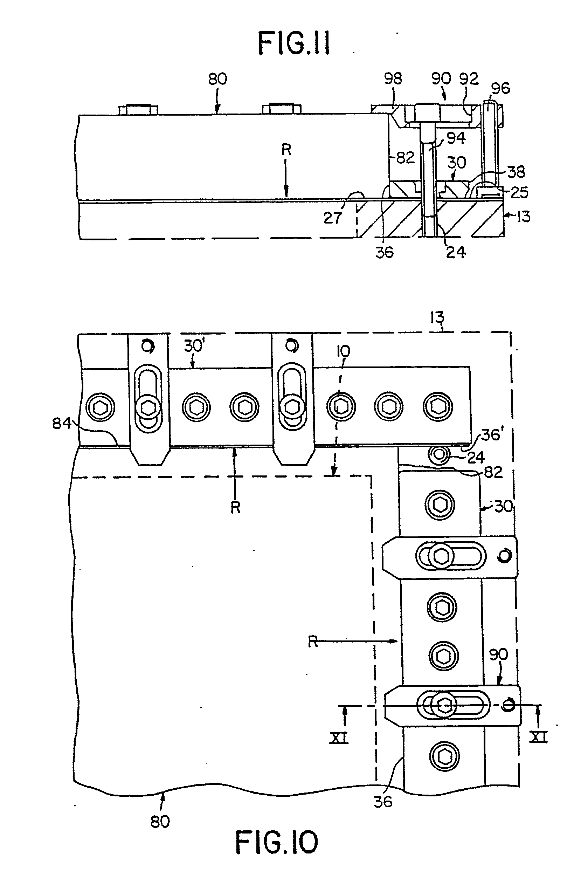

Bei dieser Einrichtung des Werkstückblocks 80 ist er in unmittelbarer Nachbarschaft des Arbeitsbereichs 10 (in Figur 10 gestrichelt angedeutet) gehalten, ohne daß die dazu erforderlichen Teile in den Arbeitsbereich eindringen und diesen einengen.

Im übrigen ist die Erfindung in den Figuren 10 und 11 an einer Draht-Funkenerosionsmaschine erläutert, bei welcher der Träger 13 sich längs zweier benachbarter seitlicher Begrenzungen des Arbeitsbereichs 10 erstreckt und dazu die Form eines Winkels hat. Demzufolge ist auf einem Schenkel des Trägers 13 ein erstes Referenzteil 30 und auf dem anderen Schenkel des Trägers 13 ein zweites Referenzteil 30' befestigt. Das Referenzteil 30' gleicht in allen Einzelheiten dem Referenzteil 30.

Wenn der Werkstückblock 80 in der in den Figuren 10 und 11 dargestellten Weise mit der Seitenfläche 82 gegen die Seitenfläche 36 des Referenzteils 30 und mit der benachbarten Seitenfläche 84 gegen die Seitenfläche 36' des Referenzteils 30' angelegt wird, ist der Werkstückblock 80 in X-Richtung und in Y-Richtung in der Maschine ausgerichtet, da in diesem Anwendungsfall die Seitenfläche 36' eine Y-Referenz darstellt.

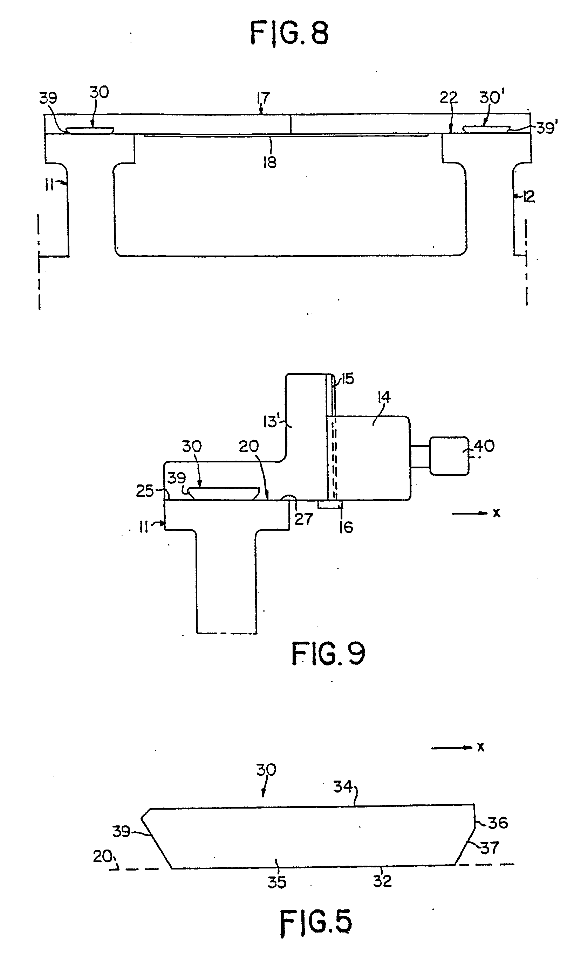

Aus den Figuren 8, 9 und 12, 13 ergibt sich die Bedeutung der Schrägfläche 39 des Referenzteils 30 als X-Referenz für sekundäre Referenz- oder Halteteile. Auf der Grundbezugsfläche 20 des Trägers 11 ist in beschriebener Weise das Referenzteil 30 befestigt, sodaß beiderseits desselben Grundbezugsflächenabschnitte 25, 27 frei bleiben. Ein sekundäres Referenzteil 13' besteht im wesentlichen aus einem Winkel, dessen einer Schenkel eine plane Unterfläche aufweist, in welche eine Schwalbenschwanznut eingeschnitten ist. Mit der Unterfläche ruht das sekundäre Referenzteil 13', das Referenzteil 30 umfassend, auf den Grundbezugsflächenabschnitten 25 und 27 auf, wobei eine Gegen-Referenzfläche in der Schwalbenschwanznut die Schrägfläche 39 unterfasst. Das sekundäre Referenzteil 13' ist damit einerseits in X-Richtung ausgerichtet, und zwar durch Anlage der Gegenreferenzfläche in der Schwalbenschwanznut gegen die Schrägfläche 39, und andererseits in Z-Richtung ausgerichtet, und zwar durch Anlage der Unterfläche des sekundären Referenzteils 13' auf den Grundbezugsflächenabschnitten 25, 27.

An den aufrechtstehenden, anderen Schenkel des sekundären Referenzteils 13' ist eine in Z-Richtung verlaufende Schiene ausgebildet, auf welcher ein Halter 14 in Z-Richtung verschiebbar montiert ist. Der Halter 14 kann an seiner freien Vorderseite beispielsweise hydraulisches Spannfutter enthalten, in das gemäß DE-PS 26 46 951 ein Elektrodenhalter mit zu bearbeitender Rohelektrode eingespannt ist. Das sekundäre Referenzteil 13' besitzt ferner einen Anschlag 16, der die Abwärtsbewegung des Halters 14 begrenzt. Die Anschlagfläche des Stops 16 liegt exakt in der Nullinie und damit in der Ebene der Grundbezugsflächenabschnitte 25 und 27. Man erkennt, daß auf diese Weise mittels des erfindungsgemäßen Referenzsystems das im Halter 14 eingespannte Werkstück durch einfaches Aneinandersetzen des sekundären Referenzteils 13' an das Referenzteil 30 im Arbeitsbereich in Z-Richtung und in X-Richtung exakt positioniert werden kann.

Eine andere Ausführungsform zeigt Figur 8, bei der ein sekundärer Halter 17 in Form einer Brücke mit dem Referenzteil 30 sowie einem gleichartigen weiteren Referenzteil 30', welches auf der Grundbezugsfläche 22 in beschriebener Weise montiert ist, gekoppelt ist. Die Brücke 17 ist an der Unterseite mit Lagerstreifen 18 versehen, auf welche ein kleineres Werkstück im Arbeitsbereich der Maschine exakt positionierbar ist. Auch bei dieser Ausführungsform dienen die Schrägflächen 39 des Referenzteils 30 und 39' des Referenzteils 30' als Bezugsflächen in X-Richtung.

Das im wesentlichen schwalbenschwanzförmige Querschnittsprofile des Referenzteils 30 bringt also den Vorteil, daß sekundäre Referenz- oder Halteteile, die mit einer entsprechenden Schwalbenschwanznut an ihren Gegen-Referenzflächen versehen sind, ohne weiteres verwendet werden können. Derartige sekundären Referenz- und Halteteile werden gewöhnlich bei anderen Draht-Funkenerosionsmaschinen verwendet, bei denen die Grundbezugsfläche unterhalb der Nullinie liegt.

Figuren 12 und 13 zeigen eine weitere Möglichkeit, eine Y-Referenz an dem Referenzteil 30 zu schaffen. Dazu kann entweder ein fester Anschlag 60 vorgesehen sein, der die Form einer Metallhülse hat. Die Hülse läßt sich in die Erweiterung eines der Durchgangslöcher 42, 44, 46 des Referenzteils 30 spielfrei einfügen. Mit ihrem oberen Mantelabschnitt steht die Hülse über die Oberfläche 34 des Referenzteils nach oben vor. Die Hülse wird durch einen Bolzen 62 gehalten, der in die zugehörige Bohrung im Träger 13 eingreift. Der Außenumfang des oberen Mantelabschnittes der Hülse 60 stellt damit eine Anschlaglinie als Y-Referenz dar.

Alternativ kann ein auf dem Referenzteil 30 verschiebbarer Reiter 64 benutzt werden, der durch eine Klemmschraube 66 an beliebiger Stelle an dem Referenzteil 30 festgeklemmt werden kann. Jede der einander gegenüberliegenden Seitenflächen 67, 68, die sich quer über die Längserstreckung des Referenzteils 30 erstrecken, kann als Y-Referenz dienen, etwa wie die Anschlagfläche 52 des Ansatzes 50. Der Reiter 64 ist auf seiner Unterseite mit einer nicht dargestellten Schwalbenschwanznut versehen und weist Gegenreferenzflächen auf, mit denen einerseits auf den Grundbezugsflächenabschnitten 25 und 27 aufliegt und andererseits gegen die Schrägfläche 39 nach Anziehen der Klemmschraube 66 anliegt. Eine Stirnfläche 65 des Reiters 64 kann mit der seitlichen Grenze des Arbeitsbereichs zusammenfallen und damit eine X-Referenz bilden.

Die Figuren 11 bis 13 zeigen darüberhinaus, daß das Referenzteil 30 an der der Stirnfläche 36 gegenüberliegenden Seite eine zweite Stirnfläche 38 besitzen kann, die parallel zur ersten Stirnfläche 36 verläuft. Das Referenzteil hat damit symmetrischen Querschnitt, sodaß sowohl die erste Seitenfläche 36 wie auch die zweite Seitenfläche 38 und die erste Schrägfläche 39 sowie die zweite Schrägfläche 37 jeweils bei Bedarf als X-Referenz in dem oben beschriebenen Sinne benutzt werden können.

**Patentansprüche**

1. Referenzsystem zum Positionieren eines Werkstückes in einer vorgegebenen Sollage innerhalb des Arbeitsbereichs (10) einer Draht-Funkenerosionsmaschine (1) relativ zum Schneidedraht (8) der Maschine (1), an deren Aufspanntisch (2) außerhalb des Arbeitsbereichs (10) wenigstens eine ebene, sich in eine x-Richtung und in eine dazu senkrechte y-Richtung erstreckende Grundbezugsfläche in Höhe der unteren Grenze (0-Linie) (9) des Arbeitsbereichs (10) ausgebildet ist, dadurch gekennzeichnet, daß ein Referenzteil (30) eine plane Unterfläche (32) besitzt und mit der Unterfläche auf der Grundbezugsfläche (20, 22) eindeutig fixierbar ist, wenigstens eine plane, sich senkrecht zur Unterfläche (32) erstreckende Seitenfläche (36) als Bezugsfläche in x-Richtung sowie gegenüber der Seitenfläche (36) eine Schrägfläche (39) als weitere Bezugsfläche in x-Richtung für ein sekundäres Referenz- oder Halteteil (70, 74, 76) aufweist, und im Querschnitt im wesentlichen Schwalbenschwanzprofil hat.

2. Referenzsystem nach Anspruch 1, dadurch gekennzeichnet, das Referenzteil parallele, sich senkrecht zur Grundbezugsfläche (20, 22) erstreckende Durchgangslöcher (42, 44, 46) aufweist.

3. Referenzsystem nach Anspruch 2, dadurch gekennzeichnet, daß alle Durchgangslöcher in fluchtender Reihe angeordnet sind.

4. Referenzsystem nach Anspruch 3, dadurch gekennzeichnet, daß die jeweils benachbarten Durchgangslöcher jeweils gleichen Abstand voneinander haben.

5. Referenzsystem nach einem der vorstehenden Ansprüche, dadurch gekennzeichnet, daß die Ausdehnung des Referenzteils in x-Richtung wesentlich kleiner ist als die Breite der Grundbezugsfläche (20, 22) in x-Richtung derart, daß bei auf der Grundbezugsfläche fixiertem Referenzteil in x-Richtung vor der Unterfläche ein sich in y-Richtung erstreckender Grundbezugsflächenabschnitt (25) freibleibt.

6. Referenzsystem nach Anspruch 5, dadurch gekennzeichnet, daß in x-Richtung hinter der Unterfläche (32) ein sich in y-Richtung erstreckender Grundbezugsflächenabschnitt (25, 27) freibleibt.

7. Referenzsystem nach einem der vorstehenden Ansprüche, dadurch gekennzeichnet, daß zwischen der schrägliegenden Fläche (39) und der der Unterfläche (32) gegenüberliegenden Oberfläche (34) eine zweite Seitenfläche (38) ausgebildet ist, die sich parallel zur ersten Seitenfläche (36) erstreckt.

8. Referenzsystem nach einem der vorstehenden Ansprüche, dadurch gekennzeichnet, daß wenigstens eine plane Stirnfläche (35) dieses Referenzteils als y-Referenz senkrecht zu der ersten Seitenfläche (36) des Referenzteils und zu der Grundbezugsfläche (20) vorgesehen ist.

9. Referenzsystem nach einem der vorstehenden Ansprüche, gekennzeichnet durch einen Ansatz (50) am Referenzteil, welcher eine über die Oberfläche (34) und/oder eine der Seitenflächen des Referenzteils vorstehende, zur ersten Seitenfläche (36) und zu der Grundbezugsfläche (20) senkrechte Anschlagfläche (52) als y-Referenz aufweist.

10. Referenzsystem nach Anspruch 8 und 9, dadurch gekennzeichnet, daß der Ansatz (50) an der Stirnfläche (35) des Referenzteils befestigt ist und sich über die Oberfläche (34) des Referenzteils erhebt.

11. Referenzsystem nach einem der vorstehenden Ansprüche, dadurch gekennzeichnet, daß das Referenzteil eine flache, langgestreckte Form hat, wobei die quer zur Unterfläche gemessene Stärke des Referenzteils wesentlich kleiner ist als seine Breite oder seine Länge.

**Claims**

1. A reference system for positioning a workpiece in a predetermined reference position within the working region (10) of a wire spark erosion machine (1) relative to the cutting wire (8) of the machine (1), at the mounting table (2) of which, outside the working region (10), is at least one flat base reference surface which extends in an x-direction and a y-direction perpendicular thereto, at the level of the lower limit (0-line) (9) of the working region (10) characterised in that a reference portion (30) has a flat underneath surface (32) and can be unequivocally fixed with the underneath surface on the base reference surface (20, 22), has at least one flat side surface (36) extending perpendicularly to the underneath surface (32) as the reference surface in the x-direction and opposite the side surface (36) an inclined surface (39) as a further reference surface in the x-direction for a secondary reference or holding portion (70, 74, 76), and is of substantially dovetail-shaped profile in cross-section.

2. A reference system according to claim 1 characterised in that the reference portion has parallel through holes (42, 44, 46) which extend normal to the base reference surface (20, 22).

3. A reference system according to claim 2 characterised in that all through holes are arranged in an aligned row.

4. A reference system according to claim 3 characterised in that the respectively adjacent through holes are each at the same spacing from each other.

5. A reference system according to one of the preceding claims characterised in that the extent of the reference portion in the x-direction is substantially smaller than the width of the base reference surface (20, 22) in the x-direction in such a way that, when the reference portion is fixed on the base reference surface, a base reference surface portion (25) which extends in the y-direction remains free in the x-direction in front of the underneath surface.

6. A reference system according to claim 5 characterised in that a base reference surface portion (25, 27) which extends in the y-direction remains free in the x-direction behind the underneath surface (32).

7. A reference system according to one of the preceding claims characterised in that a second side surface (38) which extends parallel to the first side surface (36) is provided between the inclined surface (39) and the top surface (34) which is opposite the underneath surface (32).

8. A reference system according to one of the preceding claims characterised in that there is provided at least one flat end face (35) of said reference portion as a y-reference perpendicularly to the first side surface (36) of the reference portion and to the base reference surface (20).

9. A reference system according to one of the preceding claims characterised by an attachment portion (50) on the reference portion, which has an abutment surface (52) as a y-reference, which abutment surface projects beyond the surface (34) and/or one of the side surfaces of the reference portion and is perpendicular to the first side surface (36) and to the base reference surface (20).

10. A reference system according to claims 8 and 9 characterised in that the attachment portion (50) is fixed to the end face (35) of the reference portion and rises above the surface (34) of the reference portion.

11. A reference system according to one of the preceding claims characterised in that the reference portion is of a flat elongate shape, wherein the thickness of the reference portion as measured transversely with respect to the underneath surface is substantially smaller than its width or its length.

**Revendications**

1. Système de référence pour le positionnement d'une pièce d'oeuvre dans une position de consigne prédéterminée à l'intérieur de la zone de travail (10) d'une machine d'étincelage à fil (1) relativement au fil de coupe (8) de la machine (1), sur la table de serrage (2) de laquelle, en dehors de la zone de travail (10), au moins une surface de référence de base plane, s'étendant dans une direction x et dans une direction y perpendiculaire à celle-ci, est formée à hauteur de la limite inférieure (ligne 0) (9) de la zone de travail (10), caractérisé en ce qu'une pièce de référence (30) possède une surface inférieure (32) plane et, par la surface inférieure, est fixable de manière évidente sur la surface de référence de base (20, 22), au moins une surface latérale (36) plane s'étendant perpendiculairement à la surface inférieure (32), comme surface de référence dans la direction x ainsi qu'en face de la surface latérale (36), présente une surface oblique (39) comme autre surface de référence dans la direction x pour une pièce secondaire de référence ou de maintien (70, 74, 76), et a dans la section en substance un profil en queue d'aronde.

2. Système de référence selon la revendication 1, caractérisé en ce que la pièce de référence présente des trous de passage (42, 44, 46) parallèles, s'étendant perpendiculairement à la surface de référence de base (20, 22).

3. Système de référence selon la revendication 2, caractérisé en ce que tous les trous de passage sont disposés en rangée alignée.

4. Système de référence selon la revendication 3, caractérisé en ce que les trous de passage, quand ils sont voisins, sont à la même distance l'un de l'autre.

5. Système de référence selon l'une des revendications précédentes, caractérisé en ce que la dimension de la pièce de référence dans la direction x est nettement plus petite que la largeur de la surface de référence de base (20, 22) dans la direction x de telle sorte que lorsque la pièce de référence est fixée sur la surface de référence de base dans la direction x, devant la surface inférieure, une section de la surface de référence de base (25) s'étendant dans la direction y reste libre.

6. Système de référence selon la revendication 5, caractérisé en ce que dans la direction x derrière la surface inférieure une section de la surface de référence de base (25, 27) s'étendant dans la direction y reste libre.

7. Système de référence selon l'une des revendications précédentes, caractérisé en ce qu'entre la surface disposée oblique (39) et la surface supérieure (34) opposée à la surface inférieure (32) une deuxième surface latérale (38) est formée, qui s'étend parallèlement à la première surface latérale (36).

8. Système de référence selon l'une des revendications précédentes, caractérisé en ce qu'une surface frontale plane (35) au moins de cette pièce de référence est prévue comme référence y perpendiculairement à la première surface latérale (36) de la pièce de référence et à la surface de référence de base (20).

9. Système de référence selon l'une des revendications précédentes, caractérisé par une pièce ajoutée (50) sur la pièce de référence, qui présente comme référence y une surface d'arrêt (52), saillante sur la surface supérieure (34) et/ou une des surfaces latérales de la pièce de référence, perpendiculaire à la première surface latérale (36) et à la surface de référence de base (20.

10. Système de référence selon les revendications 8 et 9, caractérisé en ce que la pièce ajoutée (50) est fixée sur la surface frontale (35) de la pièce de référence et est surélevée par rapport à la surface supérieure (34) de la pièce de référence.

11. Système de référence selon l'une des revendications précédentes, caractérisé en ce que la pièce de référence a une forme plate, allongée, l'épaisseur de la pièce de référence mesurée transversalement à la surface inférieure étant nettement plus petite que sa largeur ou sa longueur.

# FIG.1

# FIG.2

FIG.3

FIG.4

EP 0 202 452 B1

EP 0 202 452 B1

FIG.6

FIG.7

13

# FIG. 8

# FIG. 9

# FIG. 5

# FIG.II

# FIG.IO

# FIG.13

# FIG.12

16